# EUROPÄISCHE PATENTSCHRIFT

(11) **EP 3 418 516 B1**
(45) Veröffentlichungstag und Bekanntmachung des Hinweises auf die Patenterteilung: **05.08.2020**
(21) Anmeldenummer: 18178219.4
(22) Anmeldetag: 18.06.2018
(51) Int. Cl.: F01N 3/021, F01N 3/035, F01N 13/00, F01N 13/08

(54) **ABGASNACHBEHANDLUNGSSYSTEM FÜR EINEN VERBRENNUNGSMOTOR SOWIE VERBRENNUNGSMOTOR**
COMBUSTION ENGINE AND EXHAUST GAS AFTERTREATMENT SYSTEM FOR A COMBUSTION ENGINE
SYSTÈME DE TRAITEMENT DE GAZ D'ÉCHAPPEMENT POUR UN MOTEUR À COMBUSTION INTERNE AINSI QUE MOTEUR À COMBUSTION INTERNE

(30) Priorität: 21.06.2017 DE 102017113786
(43) Veröffentlichungstag der Anmeldung: 26.12.2018
(73) Patentinhaber: VOLKSWAGEN AKTIENGESELLSCHAFT, 38440 Wolfsburg (DE)
(72) Erfinder: ABERLE, Werner, 38104 Braunschweig (DE)
(74) Vertreter: Gulde & Partner

(56) Entgegenhaltungen:
- EP-A2- 1 065 352
- DE-A1-102011 050 788
- DE-U1-202007 008 906
- US-A- 4 535 588

## Beschreibung

Die Erfindung betrifft ein Abgasnachbehandlungssystem für einen Verbrennungsmotor, umfassend einen Katalysator, einen Partikelfilter sowie ein erstes Abgasrohr und ein zweites Abgasrohr sowie einen Verbrennungsmotor.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen Stickoxid-Emissionen eine Herausforderung für die Motorenentwickler dar. Bei Ottomotoren erfolgt die Abgasreinigung in bekannter Weise über einen Drei-Wege-Katalysator, sowie dem Drei-Wege-Katalysator vor- und nachgeschaltete weitere Katalysatoren. Bei Dieselmotoren finden aktuell Abgasnachbehandlungssysteme Verwendung, welche einen Oxidationskatalysator oder NOx-Speicherkatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Als Reduktionsmittel wird dabei bevorzugt Ammoniak in Form einer synthetischen, wässrigen Harnstofflösung verwendet.

Nach einem Kaltstart des Verbrennungsmotors ist es wünschenswert, die Abgasnachbehandlungskomponenten möglichst schnell auf die benötigte Betriebstemperatur zu bringen. Daher ist eine möglichst motornahe Anordnung der Abgasnachbehandlungskomponenten, die üblicherweise längsdurchströmt angeordnet sind, wünschenswert. Dies ist jedoch nicht immer möglich, da der zur Verfügung stehende Bauraum begrenzt ist.

Es gibt daher Bestrebungen, Abgasreinigungsanlagen für Kraftfahrzeuge bereitzustellen, die eine möglichst geringe Baugröße aufweisen oder elektrisch aufgeheizt werden oder über eine Nacheinspritzung verfügen. Auch ist es bekannt, Isolierungen vorzusehen, um ein Aufheizen zu beschleunigen.

So ist aus der DE 10 2008 057 960 A1 eine Anordnung zur Reinigung eines Abgasstromes bekannt, die mehrere Abgasnachbehandlungskomponenten zusammenfasst. Dies sind unter anderem eine lonisationseinrichtung, eine Agglomerationseinrichtung zur Agglomeration elektrisch aufgeladener Partikel, ein Partikelabscheider sowie Oxidationskatalysatoren, wobei die Komponenten weitgehend in Reihe geschaltet sind.

Weitere Abgasnachbehandlungssysteme sind aus EP 1 065 352 A2, DE 20 2007 008906 U1, US 4 535 588 A und DE 10 2011 050788 A1 bekannt, die einem Verbrennungsmotor nachgeordnet sind und die einen Katalysator, einen Partikelfilter sowie Abgasrohre aufweisen, die einander umgeben.

Der Erfindung liegt nun die Aufgabe zugrunde, ein Abgasnachbehandlungssystem sowie einen entsprechenden Verbrennungsmotor bereitzustellen, bei denen gegenüber dem Stand der Technik ein schnelleres Erreichen der Betriebstemperatur ermöglicht wird.

Diese Aufgabe wird durch ein Abgasnachbehandlungssystem mit den Merkmalen des Anspruchs 1 und einen Verbrennungsmotor mit den Merkmalen des Anspruchs 10 gelöst. Vorteilhafte Ausgestaltungen der Erfindung sind in den Unteransprüchen gekennzeichnet.

Es ist ein Abgasnachbehandlungssystem für einen Verbrennungsmotor, umfassend einen Katalysator, einen Partikelfilter sowie ein erstes Abgasrohr und ein zweites Abgasrohr vorgesehen, wobei das erste Abgasrohr orthogonal zur Hauptströmungsrichtung eines Abgases von dem Katalysator, der Katalysator von dem Partikelfilter und der Partikelfilter von dem zweiten Abgasrohr kontaktiert sind, wobei das erste Abgasrohr und der Katalysator, der Katalysator und der Partikelfilter, sowie der Partikelfilter und das zweite Abgasrohr derart aneinander angrenzend ausgebildet sind, ein Abgas vom ersten Abgasrohr zum zweiten Abgasrohr oder umgekehrt zu transportieren, und wobei das erste Abgasrohr, der Katalysator, der Partikelfilter und das zweite Abgasrohr plattenförmig ausgebildet und geschichtet angeordnet sind.

Die Hauptströmungsrichtung des Abgases wird durch die Strömungsrichtung im ersten oder zweiten Abgasrohr, über das das Abgas in das Abgasnachbehandlungssystem eingeleitet wird, vorgegeben.

Bei dem Katalysator handelt es sich insbesondere um einen Oxidationskatalysator oder ein NOx-Speicherkatalysator, vorzugsweise einen Oxidationskatalysator. Es ist auch erfindungsgemäß vorgesehen, dass ein zweiter Katalysator im Abgasnachbehandlungssystem angeordnet sein kann. Dieser ist vorzugsweise zwischen dem Partikelfilter und dem zweiten Abgasrohr, das heißt dem Abgasrohr zum Ableiten des Abgases, angeordnet. Dieser kann aber auch, wie nachstehend erläutert, in Form einer katalytischen Beschichtung des Partikelfilters vorliegen.

Geeignete Partikelfilter sind dem Fachmann aus dem Stand der Technik bekannt, vorzugsweise werden keramische oder metallische Partikelfilter verwendet. Der Partikelfilter kann zudem eine katalytische, vorzugsweise eine NOx-Speicherkatalysator-Beschichtung aufweisen.

Das Abgasnachbehandlungssystem verfügt vorzugsweise über ein Gehäuse, wobei das erste und das zweite Abgasrohr aus diesem herausragen können.

Durch die erfindungsgemäße Ausgestaltung eines Abgasnachbehandlungssystems mit der Abgasführung orthogonal zur Hauptströmungsrichtung des Abgases und durch die direkte Kontaktierung der Komponenten untereinander ist eine kompakte motornahe Anordnung möglich, die ein schnelles Erreichen der Betriebstemperatur ermöglicht, im Gegensatz zu den üblichen längsdurchströmte Anordnungen der Komponenten eines Abgasnachbehandlungssystems.

Die plattenförmig ausgebildeten Komponenten lassen sich einfach stapeln, wodurch eine sehr einfache und preiswerte Konfektionierung ermöglicht wird. Bei der erfindungsgemäßen Ausführungsform können die einzelnen Komponenten konzentrisch angeordnet werden, sodass eine besonders kompakte Bauform mit einer geringen Oberfläche erzielt wird.

So können das erste Abgasrohr, der Katalysator, der Partikelfilter und das zweite Abgasrohr plattenförmig gestapelt werden, wobei das Abgas sich lediglich in einer Raumrichtung bewegt. Es können aber auch auf beiden Seiten des plattenförmigen ersten Abgasrohrs ein Katalysator, ein Partikelfilter und ein zweites Abgasrohr angeordnet werden.

Bei dem erfindungsgemäßen Abgasnachbehandlungssystem können das erste Abgasrohr als Einlass für das Abgas und das zweite Abgasrohr als Auslass für das Abgas ausgebildet sein oder das zweite Abgasrohr als Einlass für das Abgas und das erste Abgasrohr als Auslass für das Abgas ausgebildet sein.

Für den Betrieb des erfindungsgemäßen Abgasnachbehandlungssystems kann somit die Reihenfolge, in der die Komponenten, nämlich erstes Abgasrohr, zweites Abgasrohr, Katalysator und Partikelfilter angeordnet sind, entsprechend den Anforderungen an das System geändert werden.

Beide Abgasrohre sind endseitig zu verschließen, wobei das an entgegengesetzten Enden erfolgen kann, sodass das Abgas an entgegengesetzten Seiten ein- und wieder ausströmt, was einen günstigen Strömungsverlauf bietet, oder es ist auch möglich, das Verschließen an gleicher Seite vorzunehmen, sodass eine Umlenkung um 180° des Abgases erfolgt, um beispielsweise besonderen konstruktiven Anforderungen beim Verbauen des Systems gerecht zu werden.

Zwischen den einzelnen Komponenten, erstes Abgasrohr, zweites Abgasrohr, Katalysator, Partikelfilter und gegebenenfalls zweiter Katalysator, können für das Abgas durchlässige Trennschichten vorgesehen sein. Diese können als Gitter, Stützstreben oder sich selbst, durch Volumenänderung nach Inbetriebnahme des Systems, fixierende Elemente erfolgen. Die Komponenten des Systems können diese Trennwände auch selbst ausbilden, sodass gar keine zusätzlichen Trennwände oder nur weniger als theoretisch notwendige Trennwände benötigt werden.

Das Abgasnachbehandlungssystem ist kubisch ausgeformt, wobei die verbauten Komponenten entsprechend ausgestaltet sind, das heißt kubisch beziehungsweise plattenförmig zum Stapeln der Komponenten

Der Verbrennungsmotor ist vorzugsweise als selbstzündender Verbrennungsmotor nach dem Diesel-Prinzip ausgestaltet, wobei der Katalysator ein Oxidationskatalysator oder ein NOx-Speicherkatalysator ist und der Partikelfilter vorzugsweise als Diesel-Partikelfilter (DPF) ausgestaltet ist. Alternativ kann der Verbrennungsmotor auch als fremdgezündeter Verbrennungsmotor nach dem Otto-Prinzip ausgeführt sein, wobei der Katalysator vorzugsweise als Drei-Wege-Katalysator und der Partikelfilter als Otto-Partikelfilter (OPF) ausgeführt ist.

Durch die in den abhängigen Ansprüchen aufgeführten Merkmale sind vorteilhafte Verbesserungen und Weiterentwicklungen des im unabhängigen Anspruch angegebenen Verbrennungsmotors möglich.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend anhand der zugehörigen Zeichnung 6 erläutert. Die Figuren 1 bis 5 betreffen nicht den Erfindungsgegenstand, sondern dienen nur zur Veranschaulichung. Es zeigen:
- Figur 1: in einer quer zur Strömungsrichtung geschnittenen Ansicht eine Abgasnachbehandlungseinrichtung in zylindrischer Ausgestaltung,
- Figur 2: in einer längs zur Strömungsrichtung geschnittenen Ansicht die Abgasnachbehandlungseinrichtung nach Figur 1,
- Figur 3: in einer längs zur Strömungsrichtung geschnittenen Ansicht die Abgasnachbehandlungseinrichtung nach Figur 1 nach einer zweiten Ausführungsform,
- Figur 4: in einer quer zur Strömungsrichtung geschnittenen Ansicht eine Abgasnachbehandlungseinrichtung mit rechteckigem Querschnitt der Komponenten,
- Figur 5: in einer quer zur Strömungsrichtung geschnittenen Ansicht eine Abgasnachbehandlungseinrichtung mit teilweise rechteckigem Querschnitt der Komponenten, und
- Figur 6: in einer längs zur Strömungsrichtung geschnittenen Ansicht eine erfindungsgemäße Abgasnachbehandlungseinrichtung mit plattenförmigen Komponenten.

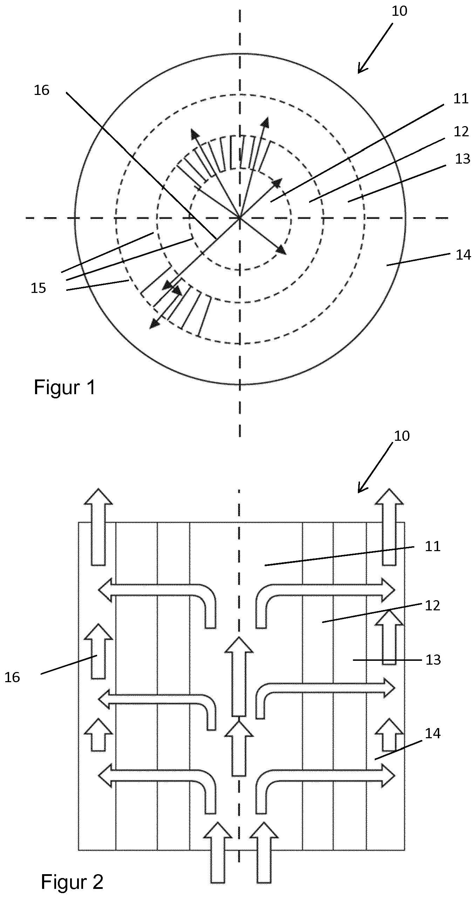

Figur 1 zeigt ein Abgasnachbehandlungssystem 10 für einen nicht dargestellten Verbrennungsmotor im Querschnitt. Das Abgasnachbehandlungssystem 10 ist zylindrisch ausgeformt, wobei ein erstes Abgasrohr 11 im Zentrum angeordnet ist und ein Katalysator 12, ein Partikelfilter 13 und ein zweites Abgasrohr 14 konzentrisch um das erste Abgasrohr 11 angeordnet sind, wobei zwischen den einzelnen Komponenten Trennwände 15 vorgesehen sind. Das durch das erste Abgasrohr 11 eintretende Abgas wird durch Pfeile 16 symbolisiert.

Dieses tritt nacheinander durch den Katalysator 12, den Partikelfilter 13 und in das zweite Abgasrohr 14, durch das das Abgas aus dem Abgasnachbehandlungssystem 10 wieder abgeleitet wird. Im Katalysator 12 und im Partikelfilter 13 sind Strukturen angedeutet, die üblicherweise im Katalysator 12 und im Partikelfilter 13 vorgesehen sind.

Figur 2 zeigt ein Abgasnachbehandlungssystems 10 gemäß Figur 1 in einem Längsschnitt. Das erste Abgasrohr 11 ist hierbei auf der Seite, die der Einströmseite des Abgases 15 gegenüberliegt, endseitig verschlossen, sodass das Abgas orthogonal zur Hauptströmungsrichtung durch den Katalysator 12 und den Partikelfilter 13 gezwungen wird, sodass es in das zweite Abgasrohr 14 gelangt und von diesem abgeleitet wird.

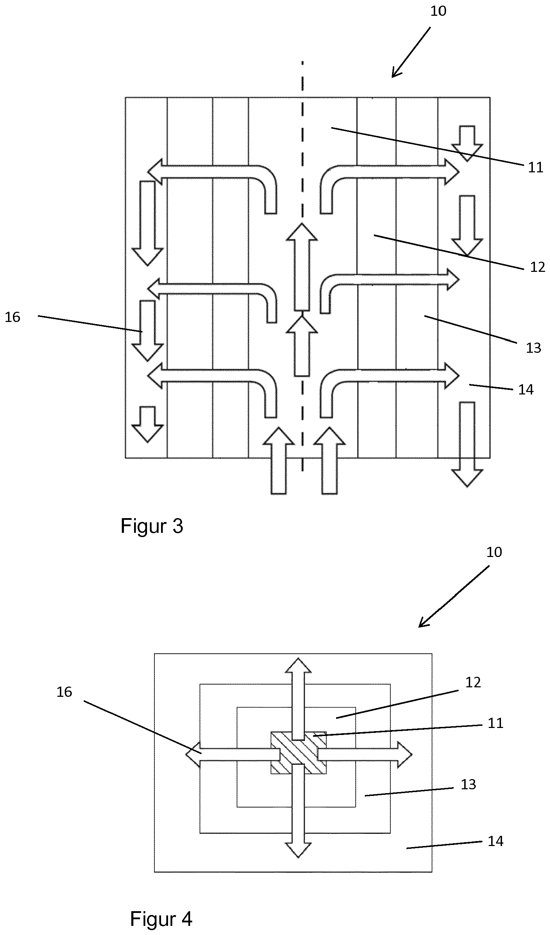

Figur 3 zeigt ein Abgasnachbehandlungssystem 10, bei der das erste Abgasrohr 11 und das zweite Abgasrohr 14 auf der gleichen Seite verschlossen sind, sodass das Abgas über das Abgasrohr 11 auf der Seite des Abgasnachbehandlungssystems 10 eingeleitet wird, auf der es durch das zweite Abgasrohr 14 wieder austritt.

Figur 4 zeigt einen Querschnitt des Abgasnachbehandlungssystems 10, die der Figur 1 mit dem Unterschied entspricht, dass die Querschnitte von dem ersten Abgasrohr 11, dem Katalysator 12, dem Partikelfilter 13 und dem zweiten Abgasrohr 14 rechteckig ausgelegt sind, sodass das Abgasnachbehandlungssystem 10 insgesamt eine kubische Bauform aufweist.

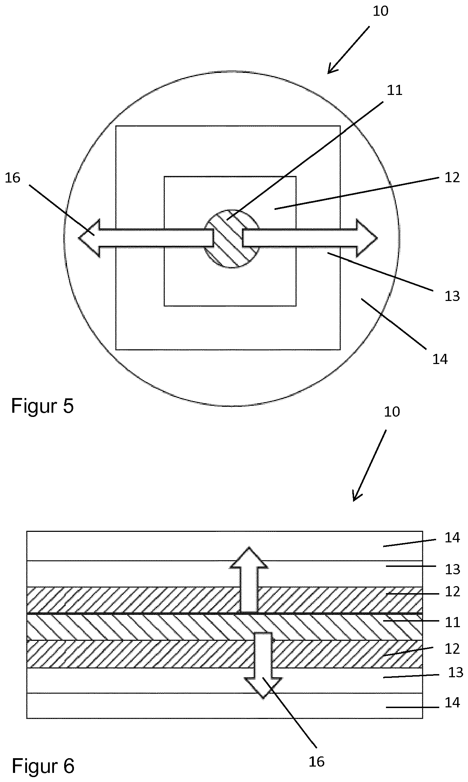

Figur 5 zeigt einen Querschnitt, der eine Mischform der Ausführungsform nach Figur 1 und Figur 4 beinhaltet. So sind das erste Abgasrohr 11 und das zweite Abgasrohr 14 kreisförmig ausgebildet, während der Katalysator 12 und der Partikelfilter 13 einen rechteckigen Querschnitt besitzen, wobei das zweite Abgasrohr 14 und der Katalysator 12 jeweils eine dem angrenzenden Bauteil angepasste Formgebung aufweisen.

Figur 6 zeigt ein erfindungsgemäßes Abgasnachbehandlungssystem 10, bei dem die einzelnen, plattenförmigen Komponenten gestapelt vorliegen, deren Funktionsweise den in den Figuren 1 bis 5 Abgasnachbehandlungssystemen 10 entspricht.

### Bezugszeichenliste

- 10: Abgasnachbehandlungssystem
- 11: erstes Abgasrohr
- 12: Katalysator
- 13: Partikelfilter
- 14: zweites Abgasrohr
- 15: Trennwand
- 16: Pfeil für Abgas

## Patentansprüche

1. Abgasnachbehandlungssystem (10) für einen Verbrennungsmotor, umfassend einen Katalysator (12), einen Partikelfilter (13) sowie ein erstes Abgasrohr (11) und ein zweites Abgasrohr (14), **dadurch gekennzeichnet, dass** das erste Abgasrohr (11) orthogonal zur Hauptströmungsrichtung eines Abgases von dem Katalysator (12), der Katalysator (12) von dem Partikelfilter (13) und der Partikelfilter (13) von dem zweiten Abgasrohr (14) kontaktiert sind, wobei das erste Abgasrohr (11) und der Katalysator (12), der Katalysator (12) und der Partikelfilter (13), sowie der Partikelfilter (13) und das zweite Abgasrohr (14) derart aneinander angrenzend ausgebildet sind, ein Abgas vom ersten Abgasrohr (11) zum zweiten Abgasrohr (14) oder umgekehrt zu transportieren, wobei das erste Abgasrohr (11), der Katalysator (12), der Partikelfilter (13) und das zweite Abgasrohr (14) plattenförmig ausgebildet und geschichtet angeordnet sind.

2. Abgasnachbehandlungssystem (10) nach Anspruch 1, **dadurch gekennzeichnet, dass** das erste Abgasrohr (11) oder das zweite Abgasrohr (14) von dem Katalysator (12), der Katalysator (12) von dem Partikelfilter (13) und der Partikelfilter (13) von dem zweiten Abgasrohr (14) oder dem ersten Abgasrohr (11) umgeben sind.

3. Abgasnachbehandlungssystem (10) nach Anspruch 1, **dadurch gekennzeichnet, dass** ein weiterer Katalysator (12), ein weiterer Partikelfilter (13) und ein weiteres zweites Abgasrohr (14) vorgesehen sind, wobei auf beiden Seiten des plattenförmigen ersten Abgasrohrs (11) jeweils ein Katalysator (12) ein Partikelfilter (13) und ein zweites Abgasrohr (14) angeordnet sind.

4. Abgasnachbehandlungssystem (10) nach einem der Ansprüche 1 bis 3, **dadurch gekennzeichnet, dass** das erste Abgasrohr (11) als Einlass für das Abgas und das zweite Abgasrohr (14) als Auslass für das Abgas ausgebildet ist oder dass das zweite Abgasrohr (14) als Einlass für das Abgas und das erste Abgasrohr (11) als Auslass für das Abgas ausgebildet ist.

5. Abgasnachbehandlungssystem (10) nach einem der Ansprüche 1 bis 4, **dadurch gekennzeichnet, dass** das erste Abgasrohr (11) in Strömungsrichtung des Abgases endseitig verschlossen ist und dass das zweite Abgasrohr (14) auf der gleichen Seite oder auf der entgegengesetzten Seite wie das erste Abgasrohr (11) endseitig verschlossen ist.

6. Abgasnachbehandlungssystem (10) nach einem der Ansprüche 1 bis 5, **dadurch gekennzeichnet, dass** jeweils zwischen dem ersten Abgasrohr (11) und dem Katalysator (12), dem Katalysator (12) und dem Partikelfilter (13) und/oder dem Partikelfilter (13) und dem zweiten Abgasrohr (14) eine für das Abgas durchlässige Trennschicht (15) angeordnet ist, oder dass zumindest eine, vorzugsweise alle Trennschicht(en) (15) zumindest durch eine der aneinander grenzenden Komponenten (11, 12, 13, 14) selber ausgebildet ist oder sind.

7. Abgasnachbehandlungssystem (10) nach einem der Ansprüche 1 bis 6, **dadurch gekennzeichnet, dass** das Abgasnachbehandlungssystem (10) kubisch ausgeformt ist.

8. Abgasnachbehandlungssystem (10) nach einem der Ansprüche 1 bis 7, **dadurch gekennzeichnet, dass** die Komponenten (11, 12, 13, 14) einen rechteckigen Querschnitt aufweisen.

9. Abgasnachbehandlungssystem (10) nach einem der Ansprüche 1 bis 8, **dadurch gekennzeichnet, dass** das Abgasnachbehandlungssystem (10) eine katalytische Beschichtung des Partikelfilters (13) aufweist.

10. Verbrennungsmotor mit einem Motorblock, mit einer Einlassseite, welche mit einem Ansaugtrakt des Verbrennungsmotors verbunden ist, und mit einer Auslassseite, welche mit einem Abgassystem (10) nach einem der Ansprüche 1 bis 9 verbunden ist.

## Claims

1. Exhaust gas aftertreatment system (10) for an internal combustion engine, comprising a catalytic converter (12), a particle filter (13) and a first exhaust pipe (11) and a second exhaust pipe (14), **characterized in that** the first exhaust pipe (11) is contacted by the catalytic converter (12) orthogonally with respect to the main flow direction of an exhaust gas, the catalytic converter (12) is contacted by the particle filter (13), and the particle filter (13) is contacted by the second exhaust pipe (14), wherein the first exhaust pipe (11) and the catalytic converter (12), the catalytic converter (12) and the particle filter (13), and the particle filter (13) and the second exhaust pipe (14) are formed adjacent to one another in such a manner that an exhaust gas can be transported from the first exhaust pipe (11) to the second exhaust pipe (14) or vice versa, wherein the first exhaust pipe (11), the catalytic converter (12), the particle filter (13) and the second exhaust pipe (14) are of plate-like design and are arranged in a layered manner.

2. Exhaust gas aftertreatment system (10) according to Claim 1, **characterized in that** the first exhaust pipe (11) or the second exhaust pipe (14) is surrounded by the catalytic converter (12), the catalytic converter (12) is surrounded by the particle filter (13) and the particle filter (13) is surrounded by the second exhaust pipe (14) or by the first exhaust pipe (11) .

3. Exhaust gas aftertreatment system (10) according to Claim 1, **characterized in that** a further catalytic converter (12), a further particle filter (13) and a further second exhaust pipe (14) are provided, wherein in each case a catalytic converter (12), a particle filter (13) and a second exhaust pipe (14) are arranged on either side of the plate-like first exhaust pipe (11) .

4. Exhaust gas aftertreatment system (10) according to one of Claims 1 to 3, **characterized in that** the first exhaust pipe (11) is designed as an inlet for the exhaust gas and the second exhaust pipe (14) as an outlet for the exhaust gas, or **in that** the second exhaust pipe (14) is designed as inlet for the exhaust gas and the first exhaust pipe (11) as an outlet for the exhaust gas.

5. Exhaust gas aftertreatment system (10) according to one of Claims 1 to 4, **characterized in that** the first exhaust pipe (11) is closed on the end side in the flow direction of the exhaust gas, and **in that** the second exhaust pipe (14) is closed on the same side as, or on the opposite side to, the first exhaust pipe (11).

6. Exhaust gas aftertreatment system (10) according to one of Claims 1 to 5, **characterized in that** a separating layer (15) which is permeable to the exhaust gas is in each case arranged between the first exhaust pipe (11) and the catalytic converter (12), the catalytic converter (12) and the particle filter (13) and/or the particle filter (13) and the second exhaust pipe (14), or **in that** at least one, preferably all of the, separating layer(s) (15) is or are formed at least by one of the mutually adjacent components (11, 12, 13, 14) itself.

7. Exhaust gas aftertreatment system (10) according to one of Claims 1 to 6, **characterized in that** the exhaust gas aftertreatment system (10) is formed cuboidally.

8. Exhaust gas aftertreatment system (10) according to one of Claims 1 to 7, **characterized in that** the components (11, 12, 13, 14) have a rectangular cross section.

9. Exhaust gas aftertreatment system (10) according to one of Claims 1 to 8, **characterized in that** the exhaust gas aftertreatment system (10) has a catalytic coating of the particle filter (13).

10. Internal combustion engine with an engine block, with an inlet side which is connected to an intake tract of the internal combustion engine, and with an outlet side which is connected to an exhaust system (10) according to one of Claims 1 to 9.

## Revendications

1. Système de post-traitement des gaz d'échappement (10) pour un moteur à combustion interne, comprenant un catalyseur (12), un filtre à particules (13) ainsi qu'un premier tuyau d'échappement (11) et un deuxième tuyau d'échappement (14), **caractérisé en ce que** le premier tuyau d'échappement (11), dans la direction orthogonale à la direction d'écoulement principale de gaz d'échappement, est mis en contact avec le catalyseur (12), le catalyseur (12) avec le filtre à particules (13) et le filtre à particules (13) avec le deuxième tuyau d'échappement (14), le premier tuyau d'échappement (11) et le catalyseur (12), le catalyseur (12) et le filtre à particules (13) ainsi que le filtre à particules (13) et le deuxième tuyau d'échappement (14) étant configurés adjacents l'un à l'autre de manière à transporter les gaz d'échappement du premier tuyau d'échappement (11) au deuxième tuyau d'échappement (14) ou inversement, le premier tuyau d'échappement (11), le catalyseur (12), le filtre à particules (13) et le deuxième tuyau d'échappement (14) étant configurés en forme de plaque et disposés empilés.

2. Système de post-traitement des gaz d'échappement (10) selon la revendication 1, **caractérisé en ce que** le premier tuyau d'échappement (11) ou le deuxième tuyau d'échappement (14) est entouré par le catalyseur (12), le catalyseur (12) par le filtre à particules (13) et le filtre à particules (13) par le deuxième tuyau d'échappement (14) ou le premier tuyau d'échappement (11) .

3. Système de post-traitement des gaz d'échappement (10) selon la revendication 1, **caractérisé en ce qu'**un catalyseur (12) supplémentaire, un filtre à particules (13) supplémentaire et un deuxième tuyau d'échappement (14) supplémentaire sont présents, un catalyseur (12), un filtre à particules (13) et un deuxième tuyau d'échappement (14) étant respectivement disposés sur les deux côtés du premier tuyau d'échappement (11) en forme de plaque.

4. Système de post-traitement des gaz d'échappement (10) selon l'une des revendications 1 à 3, **caractérisé en ce que** le premier tuyau d'échappement (11) est réalisé sous la forme d'une entrée pour les gaz d'échappement et le deuxième tuyau d'échappement (14) sous la forme d'une sortie pour les gaz d'échappement, ou **en ce que** le deuxième tuyau d'échappement (14) est réalisé sous la forme d'une entrée pour les gaz d'échappement et le premier tuyau d'échappement (11) sous la forme d'une sortie pour les gaz d'échappement.

5. Système de post-traitement des gaz d'échappement (10) selon l'une des revendications 1 à 4, **caractérisé en ce que** le premier tuyau d'échappement (11) est fermé du côté de l'extrémité dans le sens de l'écoulement des gaz d'échappement et **en ce que** le deuxième tuyau d'échappement (14) est fermé du côté de l'extrémité du même côté que le premier tuyau d'échappement (11) ou sur le côté opposé.

6. Système de post-traitement des gaz d'échappement (10) selon l'une des revendications 1 à 5, **caractérisé en ce qu'**une couche de séparation (15) perméable aux gaz d'échappement est respectivement disposée entre le premier tuyau d'échappement (11) et le catalyseur (12), le catalyseur (12) et le filtre à particules (13) et/ou le filtre à particules (13) et le deuxième tuyau d'échappement (14), ou **en ce qu'**au moins une, de préférence toutes les couches de séparation (15) est ou sont configurée(s)au moins par l'un des composants (11, 12, 13, 14) adjacents l'un de l'autre.

7. Système de post-traitement des gaz d'échappement (10) selon l'une des revendications 1 à 6, **caractérisé en ce que** le système de post-traitement des gaz d'échappement (10) est réalisé de forme cubique.

8. Système de post-traitement des gaz d'échappement (10) selon l'une des revendications 1 à 7, **caractérisé en ce que** les composants (11, 12, 13, 14) possèdent une section transversale rectangulaire.

9. Système de post-traitement des gaz d'échappement (10) selon l'une des revendications 1 à 8, **caractérisé en ce que** le système de post-traitement des gaz d'échappement (10) possède un revêtement catalytique du filtre à particules (13).

10. Moteur à combustion interne comprenant un bloc-moteur, ayant un côté d'entrée qui est relié à un tube d'aspiration du moteur à combustion interne, et ayant un côté de sortie qui est relié à un système de post-traitement des gaz d'échappement (10) selon l'une des revendications 1 à 9.
